# EUROPÄISCHE PATENTSCHRIFT

(11) **EP 1 075 068 B1**
(45) Veröffentlichungstag und Bekanntmachung des Hinweises auf die Patenterteilung: **27.10.2010**
(21) Anmeldenummer: 99123004.6
(22) Anmeldetag: 19.11.1999
(51) Int. Cl.: H02H 3/12

(54) **Schaltgerät**
Switching apparatus
Appareil de commutation

(30) Priorität: 05.08.1999 DE 19936983
(43) Veröffentlichungstag der Anmeldung: 07.02.2001
(73) Patentinhaber: Eltako GmbH Schaltgeräte, 70736 Fellbach (DE)
(72) Erfinder: Ziegler, Peter, D-71404 Korb (DE)
(74) Vertreter: Hoeger, Stellrecht & Partner Patentanwälte

(56) Entgegenhaltungen:
- US-A- 4 972 153

## Beschreibung

Die vorliegende Erfindung betrifft ein Schaltgerät zur Unterbrechung der Stromversorgung von in einen Stromkreis geschalteten Verbrauchern, insbesondere in Schlafräumen, mit einer Meßeinheit zum Messen des im Stromkreis fließenden Stroms, einer Vergleichseinheit zum Vergleichen des Strommeßwerts mit einem Referenzwert, einer Schalteinheit zum Unterbrechen und Schließen des Stromkreises und mit einer Spannungsversorgungseinheit zum Bereitstellen einer Meßspannung bei unterbrochenem Stromkreis, wobei die Schalteinheit den Stromkreis unterbricht, wenn der Strommeßwert einen Referenzwert unterschreitet.

Derartige Schaltgeräte sind als Netz- oder Feldfreischalter bekannt. Sie werden insbesondere in Schlaf- und in Wohnräumen eingesetzt, um in Zeiten, in denen kein elektrischer Verbraucher benutzt wird, diese Räume von der Netzversorgung zu trennen. Damit soll sichergestellt werden, daß ein Benutzer dieser Räume in den Zeiten, in denen alle elektrischen Verbraucher abgeschaltet sind, nicht unnötigerweise elektromagnetischen Feldern ausgesetzt ist.

Um derartige elektromagnetische Felder, wie sie sich um jeden mit elektrischer Spannung, insbesondere mit Wechselspannung, beaufschlagten elektrischen Leiter ausbilden, zu vermeiden, kann der in Frage stehende Raum, beispielsweise ein Schlafzimmer, mittels eines Schaltkontakts manuell und/oder zeitabhängig spannungsfrei geschaltet werden. Dies ist für den Benutzer jedoch umständlich. Es sind deshalb Schaltgeräte bekannt, die den Stromkreis selbsttätig unterbrechen, sobald kein Strom mehr fließt, und den Stromkreis wieder schließen, wenn ein Verbraucher eingeschaltet wird. Zu diesem Zwecke weisen sie eine Meßeinheit auf, mit deren Hilfe der im Stromkreis fließende Strom ständig gemessen wird. Zusätzlich umfassen die Schaltgeräte eine Spannungsversorgungseinheit, die eine Meßspannung für den Stromkreis bereitstellt. Nach einer Unterbrechung des Stromkreises wird mit Hilfe dieser meist sehr geringen Meßspannung geprüft, ob in dem vom elektromagnetischen Feld freigeschalteten Raum ein elektrischer Verbraucher eingeschaltet wird. Ist dies der Fall, so fließt im Stromkreis aufgrund der Meßspannung ein von der Meßeinheit erfaßbarer Strom. Dies hat wiederum zur Folge, daß die zum Einsatz kommende Schalteinheit den Stromkreis wieder schließt, so daß die Verbraucher wieder mit der Stromversorgung verbunden sind.

Es sind allerdings Verbraucher bekannt, die auch im abgeschalteten Zustand einen gewissen Stromverbrauch aufweisen, beispielsweise Lichtdimmer, Fernseh- oder Videogeräte im Stand-by-Betrieb und dgl. Um zu vermeiden, daß beispielsweise bei einem Fernsehgerät im Stand-by-Betrieb aufgrund des dann fließenden geringen Stroms ständig der Stromkreis geschlossen und damit der Benutzer auch im Stand-by-Betrieb des Fernsehgeräts einem elektromagnetischen Feld ausgesetzt ist, ist es bekannt, Schaltgeräte zusätzlich mit einer Vergleichseinheit auszugestalten zum Vergleichen des auftretenden Strommeßwerts mit einem Referenzwert. Dies ermöglicht es, den Stromkreis dann zu unterbrechen, wenn der Strommeßwert den Referenzwert unterschreitet. Der Referenzwert kann hierbei so festgelegt werden, daß er über dem Strommeßwert liegt, der sich beispielsweise im Stand-by-Betrieb des Fernsehgeräts einstellt. Dadurch wird sichergestellt, daß auch im Stand-by-Betrieb der Stromkreis unterbrochen wird.

Nachteilig an derartigen Schaltgeräten ist allerdings, daß der Benutzer den Referenzwert jeweils manuell einstellen muß. Dies erschwert die Handhabung des Schaltgeräts. Eine Einstellung muß nicht nur zum einmaligen Festlegen eines Referenzwerts erfolgen, sondern auch dann, wenn zusätzliche Verbraucher in den Stromkreis geschaltet werden, die auch im ausgeschalteten Zustand, also beispielsweise im Stand-by-Betrieb, einen gewissen Stromverbrauch aufweisen. Wird beispielsweise zusätzlich ein Videorecorder mit Stand-by-Betrieb in den Stromkreis geschaltet, so hat dies eine Erhöhung des Stromverbrauchs zur Folge, wodurch wiederum der Strommeßwert derart ansteigt, daß er über dem zuvor eingestellten Referenzwert liegt, so daß keine Unterbrechung des Stromkreises mehr erfolgt. Der Benutzer muß somit den Referenzwert erneut einstellen.

Aus dem Dokument US-A-4,972,153 ist ein Überwachungsgerät bekannt, das an eine Gruppe von elektrischen Geräten angeschlossen werden kann, um zu erfassen, wenn eines oder mehrere der elektrischen Geräte außer Funktion gerät und um dann den Ausfall des Gerätes anzuzeigen. Das Überwachungsgerät weist eine Strommesseinheit auf zum Erfassen des Versorgungsstroms der Geräte und eine Vergleichseinheit, mit der der erfasste Stromwert mit einem Referenzwert verglichen werden kann. Der Referenzwert kann in Abhängigkeit vom jeweils überwachten elektrischen Gerät eingestellt werden. Der Vergleichseinheit ist eine Logikeinheit nachgeordnet, die in Abhängigkeit vom Ergebnis des Vergleichs einer Anzeigeeinheit ein Signal bereitstellt. Das Signal kann außerdem einem Relais zugeführt werden, dessen Ausgangsleitungen an ein akustisches Alarmgerät oder an ein Computersteuerungssystem etc. angeschlossen werden können.

Aufgabe der vorliegenden Erfindung ist es, die voranstehend genannten Nachteile zu verhindern und ein Schaltgerät der eingangs genannten Art derart auszugestalten daß es für einen Benutzer einfacher handhabbar ist.

Diese Aufgabe wird bei einem Schaltgerät der gattungsgemäßen Art erfindungsgemäß dadurch gelöst, daß der bei geschlossenem Stromkreis auftretende niedrigste Strommeßwert selbsttätig bestimmbar und ein diesem entsprechender Wert als Referenzwert für die Vergleichseinheit speicherbar ist. Ein derartiges Schaltgerät zeichnet sich durch ein "Selbstlernverhalten" aus, indem es selbsttätig den günstigsten Referenzwert sucht und diesen für den Vergleich mit dem aktuellen Strommeßwert heranzieht. Hierbei fließt in die Erfindung die Überlegung mit ein, daß bei Änderung der Anzahl oder der Art der in den Stromkreis geschalteten Verbraucher sich der Stromverbrauch auch im abgeschalteten Zustand üblicherweise ändert. Es stellt sich somit ein neuer minimaler Strommeßwert ein. Dieser niedrigste auftretende Strommeßwert wird vom erfindungsgemäßen Schaltgerät erkannt und als neuer Referenzwert für den Vergleich mit dem jeweils aktuellen Strommeßwert herangezogen. Das Schaltgerät paßt sich somit selbsttätig den jeweiligen Einsatzbedingungen an, ohne daß vom Benutzer eine komplizierte Einstellung vorgenommen werden muß.

Günstig ist es, wenn der innerhalb eines bestimmten Zeitintervalls auftretende niedrigste Strommeßwert als Referenzwert speicherbar ist. Als Zeitintervall kann beispielsweise eine 24-stündige Lernphase verwendet werden, d.h. es wird mittels des Schaltgeräts festgestellt, welches der niedrigste Strommeßwert innerhalb von 24 Stunden ist. Dieser Wert wird dann als Referenzwert für die Vergleichseinheit herangezogen.

Vorzugsweise ist die Länge des Zeitintervalls vorgebbar, so daß das Schaltgerät unterschiedlichsten Einsatzbedingungen auf einfache Weise angepaßt werden kann. Hierbei kann die jeweils günstigste Länge des Zeitintervalls vom Fachpersonal vorgegeben werden, während der Benutzer, in der Regel ein Laie, keine Einstellungen mehr vornehmen muß.

Bevorzugt ist der Referenzwert in bestimmten Zeitabständen aktualisierbar. Es kann beispielsweise vorgesehen sein, daß der Referenzwert stündlich aktualisiert wird, wobei als neuer Referenzwert jeweils der niedrigste Strommeßwert innerhalb der letzten 24 Stunden vor der Aktualisierung herangezogen wird.

Von Vorteil ist es, wenn die für die Aktualisierung des Referenzwerts maßgeblichen Zeitabstände vorgebbar sind, um somit das Schaltgerät optimal an unterschiedlichste Einsatzbedingungen anpassen zu können. Bei einer besonders bevorzugten Ausführungsform ist vorgesehen, daß bei einer Verringerung des bei geschlossenem Stromkreis auftretenden niedrigsten Strommeßwerts der verringerte Strommeßwert praktisch sofort als neuer Referenzwert abspeicherbar ist. Somit stimmt der Referenzwert jederzeit mit dem jeweils auftretenden niedrigsten Strommeßwert überein.

Für den Referenzwert ist vorzugsweise ein Minimal- und/oder ein Maximalwert vorgebbar. Dadurch kann vermieden werden, daß beispielsweise aufgrund einer Fehlfunktion des Verbrauchers und einer damit verbundenen Störung des Stromverbrauchs beispielsweise ein Referenzwert von 0 mA abgespeichert wird, der bei einwandfreier Funktion des Verbrauchers aufgrund von dessen Stand-by-Betrieb gar nicht auftreten kann.

Um bei der ersten Inbetriebnahme des Schaltgeräts bereits eine sichere Funktion zu haben, ohne daß zunächst eine Lernphase abgewartet werden muß, ist bei einer bevorzugten Ausgestaltung vorgesehen, daß bei Inbetriebnahme des Schaltgeräts ein Festwert als Referenzwert für die Vergleichseinheit heranziehbar ist. Dies hat den Vorteil, daß das Schaltgerät sofort mit einem Referenzwert arbeiten kann.

Der Festwert kann beispielsweise vom Hersteller oder vom Benutzer vorgebbar sein. Besonders günstig ist es, wenn der Festwert durch Messung des bei Inbetriebnahme des Schaltgeräts im Stromkreis fließenden Stroms bestimmbar ist. Bei einer derartigen Ausgestaltung wird bei der Inbetriebnahme des Schaltgeräts zunächst eine Strommessung durchgeführt. Der dabei ermittelte Strommeßwert wird dann als Referenzwert abgespeichert. Anschließend läuft bei bereits funktionsbereitem Schaltgerät die weitere Lernphase, in der der niedrigste Strommeßwert ermittelt wird. Bei einer derartigen Ausgestaltung fließt der Gedanke mit ein, daß die Inbetriebnahme des Schaltgeräts üblicherweise dann erfolgt, wenn die in Betracht zu ziehenden Verbraucher gezielt ausgeschaltet bzw. im Stand-by-Betrieb sind. Somit liegt bei der Inbetriebnahme des Schaltgeräts nur ein geringer Stromverbrauch vor, der der weiteren Funktion des Schaltgeräts zugrundegelegt wird.

Es kann vorgesehen sein, daß das Schaltgerät Bedienungselemente, beispielsweise eine Tastatur, umfaßt, mit deren Hilfe ein Referenzwert eingebbar ist. Somit läßt sich nicht nur bei der Inbetriebnahme des Schaltgeräts sondern auch zu einem späteren Zeitpunkt ein Referenzwert eingeben.

Von Vorteil ist es, wenn das Schaltgerät Bedienungselemente umfaßt, mittels derer ein aktueller Strommeßwert als Referenzwert abgespeichert werden kann. Dies gibt die Möglichkeit, zu einem beliebigen Zeitpunkt den in diesem Moment auftretenden Strommeßwert als Referenzwert für die Vergleichseinheit heranzuziehen. Hierbei hat es sich insbesondere für Testphasen als vorteilhaft erwiesen, wenn ein weiterer Referenzwert erst nach einer zusätzlichen manuellen Eingabe abspeicherbar ist. Damit kann zunächst ein aktueller Strommeßwert als Referenzwert herangezogen werden, um beispielsweise die Funktion des Schaltgeräts zu überprüfen. Erst wenn die Funktion sichergestellt ist, kann dann mittels einer weiteren manuellen Eingabe, beispielsweise durch Betätigen einer Taste, das Schaltgerät in einen derartigen Zustand versetzt werden, daß nunmehr ein weiterer Referenzwert abgespeichert werden kann, der beispielsweise in der Lernphase ermittelt wird.

Bei einer besonders bevorzugten Ausführungsform des erfindungsgemäßen Schaltgeräts ist vorgesehen, daß zwischen dem Unterbrechen und Schließen des Stromkreises eine Hysterese vorliegt, d.h. die Unterbrechung des Stromkreises erfolgt dann, wenn der aktuelle Strommeßwert einen ersten Referenzwert unterschreitet, und das Schließen des Stromkreises erfolgt erst dann, wenn der aktuelle Strommeßwert einen zweiten Referenzwert übersteigt, der höher ist als der erste Referenzwert. Die Referenzwerte bilden jeweils eine Schaltschwelle, und durch die unterschiedliche Einstellung der Schaltschwelle zum Schließen des Stromkreises wird verhindert, daß sich ein nicht eindeutiger Zustand einstellt, bei dem das Schaltgerät den Stromkreis fortlaufend unterbricht und schließt.

Hierbei ist es günstig, wenn die Hysterese einstellbar ist, d.h. wenn der Unterschied zwischen den Schaltschwellen zum Unterbrechen und Schließen des Stromkreises einstellbar ist.

Als besonders günstig hat es sich erwiesen, wenn die Einstellung der Hysterese selbsttätig erfolgt. Hierzu kann beispielsweise vorgesehen sein, daß das Schaltgerät eine Prüfeinheit umfaßt, mit deren Hilfe ein fortlaufendes Unterbrechen und Schließen des Stromkreises erkennbar und die Hysterese so einstellbar ist, daß ein fortlaufendes Unterbrechen und Schließen verhindert wird. Damit wird auf besonders einfach handhabbare Weise ein "Takten" des Schaltgeräts verhindert.

Zum Abspeichern des Referenzwerts und gegebenenfalls des Hysteresewerts umfaßt das Schaltgerät vorzugsweise ein elektronisches Speicherelement, günstig ist hierbei ein nicht-flüchtiger Speicher, beispielsweise ein EEPROM. Um die Handhabung des Schaltgeräts zusätzlich zu vereinfachen, ist bei einer vorteilhaften Ausführungsform vorgesehen, daß das Schaltgerät ein Anzeigeelement zum Anzeigen abgespeicherter Werte umfaßt.

In vielen Fällen hat es sich als vorteilhaft erwiesen, wenn das Schaltgerät eine Umschalteinheit aufweist zum Umschalten zwischen manuell eingegebenen und selbsttätig abgespeicherten Werten. Bei einem derartigen Schaltgerät kann zwischen einem Automatikbetrieb und einem Manuellbetrieb gewählt werden, hierbei zeichnet sich der Automatikbetrieb durch eine selbsttätige Bestimmung des jeweils günstigsten Referenzwerts aus, während im manuellen Betrieb, beispielsweise für eine Testphase, spezielle Werte eingegeben werden können.

Von Vorteil ist es, wenn die Umschaltung zwischen manuell eingegebenen und selbsttätig abgespeicherten Werten in Abhängigkeit eingebbarer Parameter selbsttätig erfolgt. So kann beispielsweise vorgesehen sein, daß in Abhängigkeit von der Uhrzeit, der Helligkeit und/oder der Umgebungstemperatur eine Umschaltung vom Automatikbetrieb in den manuellen Betrieb und umgekehrt erfolgt.

Besonders günstig ist es, wenn der Referenzwert mit Korrekturfaktoren verknüpfbar ist. Insbesondere bei einem programmgesteuerten Betrieb des Schaltgeräts hat es sich als günstig erwiesen, wenn der ermittelte niedrigste Strommeßwert mit einem Korrekturfaktor multiplizierbar ist und der so gewonnene Wert als Referenzwert für die Vergleichseinheit abgespeichert wird. Dies gibt auch auf einfache Weise die Möglichkeit, aus dem ermittelten niedrigsten Strommeßwert erste und zweite Referenzwerte zu bilden zum Unterbrechen bzw. Schließen des Stromkreises unter Beachtung einer Hysterese, wie dies voranstehend bereits erläutert wurde.

Wie bereits dargelegt, wird bei unterbrochenem Stromkreis von der Spannungsversorgungseinheit eine Meßspannung bereitgestellt, mit deren Hilfe festgestellt werden kann, wenn ein Verbraucher im Stromkreis eingeschaltet wird. Um das Schaltgerät an unterschiedlichste Einsatzbedingungen anzupassen, ist es von Vorteil, wenn die Meßspannung einstellbar ist. Es kann beispielsweise vorgesehen sein, daß die Meßspannung zwischen einem Wert von ungefähr 3 Volt bis ungefähr 50 Volt veränderbar ist. Als besonders vorteilhaft haben sich Werte von etwa 4 Volt bis ungefähr 40 Volt erwiesen. Günstig ist es auch, wenn die Meßspannung zwischen einer Gleichspannung und einer Wechselspannung wählbar ist.

Sind in den vom Schaltgerät überwachten Stromkreis Dimmer geschaltet, so hat sich eine relativ hohe Meßspannung von ca. 40 Volt als günstig erwiesen. In diesem Zusammenhang ist es von Vorteil, wenn das Meßgerät eine Dimmer-Erkennungsschaltung aufweist zum selbsttätigen Erkennen eines Dimmers im Stromkreis, und wenn die Meßspannung in Abhängigkeit vom Vorliegen eines Dimmers einstellbar ist. Das Vorliegen eines Dimmers kann hierbei an den vom Dimmer verursachten Störungen beim Phasenan- und/oder -abschnitt erkannt werden, die sich beim Stromfluß einstellen. Ist ein Dimmer in den Stromkreis geschaltet, so wird, wie bereits erwähnt, die Meßspannung vorzugsweise auf einen Wert von cirka 40 Volt eingestellt. Liegt kein Dimmer vor, so wird die Meßspannung vorzugsweise auf einen Wert von etwa 4 Volt bis ungefähr 5 Volt eingestellt.

Beim Einbau und Test des Schaltgeräts ist es günstig, wenn das Schaltgerät Schaltglieder zum manuellen Auslösen der vom Schaltgerät hervorgerufenen Schaltvorgänge umfaßt. Somit kann manuell die Funktion des an sich selbsttätig arbeitenden Schaltgeräts nachgestellt werden, um auf diese Weise eine Überprüfung vornehmen zu können.

Das Schaltgerät ist vorzugsweise in ein Lastteil zum Unterbrechen und Schließen des Stromkreises sowie in ein Steuerteil zur Ansteuerung des Lastteils unterteilt. Das Lastteil kann beispielsweise von einem Relais ausgebildet werden, das von einem bevorzugt programmierbaren Steuerteil ansteuerbar ist.

Hierbei ist es günstig, wenn das Lastteil über ein Fernübertragungsmedium, beispielsweise eine Funk- oder BUS-Verbindung oder über ein sogenanntes "Power net" mit dem Steuerteil verbindbar ist.

Es kann hierbei vorgesehen sein, daß das Schaltgerät mehrere Steuerteile umfaßt, die mit dem Lastteil in elektrischer Verbindung stehen. Dies ist insbesondere bei sehr umfangreichen Stromkreisen von Vorteil. In diesem Falle können mehrere Steuerteile, mit denen der Stromfluß überwacht wird, an ein gemeinsames Lastteil zum Unterbrechen des Stromkreises angeschlossen werden. Es kann vorgesehen sein, daß das Schaltgerät mittels Anwesenheitssensoren aktivierbar ist. Dies gibt die Möglichkeit, den zu überwachenden Stromkreis in jedem Falle zu unterbrechen, sofern kein Benutzer der in den Stromkreis geschalteten Verbraucher anwesend ist. Erst bei Anwesenheit wird das Schaltgerät aktiviert, so daß nunmehr der Stromkreis überwacht wird.

Um bei einer Störung des Schaltgeräts auf einfache Weise eine Überprüfung vornehmen zu können, ist vorzugsweise vorgesehen, daß an das Schaltgerät eine Aufzeichnungseinheit anschließbar ist zum Aufzeichnen des Schaltverhaltens des Schaltgeräts. Bei einer alternativen Ausgestaltung ist vorgesehen, daß das Schaltgerät eine derartige Aufzeichnungseinheit umfaßt. Dies ist insbesondere bei Schaltgeräten mit programmierbarem Steuerteil von Vorteil, da derartige Steuerteile in vielen Fällen mit geringem Aufwand zusätzlich mit einer Aufzeichnungseinheit ausgestattet werden können.

Die nachfolgende Beschreibung zweier vorteilhafter Ausführungsformen der Erfindung dient im Zusammenhang mit der Zeichnung der näheren Erläuterung. Es zeigen:
- Figur 1:: ein Blockschaltbild einer ersten Ausführungsform eines erfindungsgemäßen Schaltgeräts;
- Figur 2:: ein Blockschaltbild einer zweiten Ausführungsform eines erfindungsgemäßen Schaltgeräts und
- Figur 3:: ein Flußdiagramm zur Erläuterung der Betriebsweise der in den Figuren 1 und 2 dargestellten Schaltgeräte.

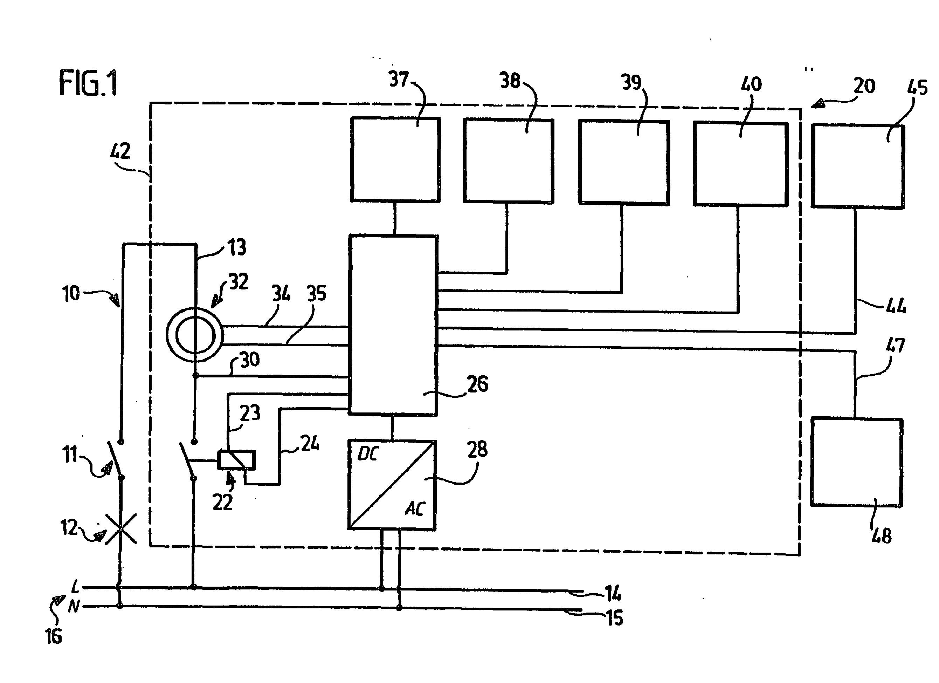

In Figur 1 ist ein Stromkreis 10 dargestellt mit einem Schalter 11 und einem Verbraucher 12, die über eine Stromleitung 13 an eine Phase 14 und einen Nulleiter 15 einer Netzversorgung 16 angeschlossen sind.

Um sicherzustellen, daß bei ausgeschaltetem Verbraucher, d.h. bei geöffnetem Schalter 11, die Stromleitung 13 nicht von einem elektromagnetischen Feld umgeben ist, ist in den Stromkreis 10 ein Schaltgerät 20 zum Unterbrechen der Stromversorgung des Verbrauchers 12 geschaltet. Das Schaltgerät 20 umfaßt hierbei zum Unterbrechen und Schließen des Stromkreises 10 eine Schalteinheit in Form eines Relais 22, das über Steuerleitungen 23, 24 von einem Rechenwerk 26 angesteuert werden kann. Die Spannungsversorgung des Rechenwerks 26 erfolgt über einen Gleichrichter und Spannungswandler 28, der an die Netzversorgung 16 angeschlossen ist. Über eine Ausgangsleitung 30 wird dem Stromkreis 10 eine Meßspannung in Form einer Kleinspannung vom Rechenwerk 26 bereitgestellt, wenn der Stromkreis 10 vom Relais 22 unterbrochen wird.

In den Stromkreis 10 ist außerdem ein Stromwandler 32 geschaltet, der über Eingangsleitungen 34, 35 mit dem Rechenwerk 26 in Verbindung steht. An das Rechenwerk 26 sind zusätzlich ein elektronischer Speicher 37, ein Zeitglied 38 sowie Bedien- und Anzeigeelemente 39 bzw. 40 angeschlossen, die von einem gemeinsamen, in Figur 1 gestrichelt dargestellten Gehäuse 42 umgeben sind. Zusätzlich steht das Rechenwerk 26 über eine Signalleitung 44 mit Anwesenheitssensoren 45 und über eine Ausgabeleitung 47 mit einer externen Zentraleinheit 48 in Verbindung.

Während des Betriebs des Schaltgeräts 20 wird vom Rechenwerk 26 über den Stromwandler 32 der im Stromkreis 10 fließende Strom gemessen. Wird der Verbraucher 12 über den Schalter 11 eingeschaltet, so erhält das Relais 22 vom Rechenwerk 26 ein Steuersignal zum Schließen des Stromkreises 10. Wird der Verbraucher 12 ausgeschaltet, so wird dies vom Rechenwerk 26 erkannt, das daraufhin über das Relais 22 den Stromkreis 10 unterbricht. Um anschließend ein Wiedereinschalten des Verbrauchers 12 feststellen zu können, stellt das Rechenwerk 26 über die Ausgangsleitung 30 eine Meßspannung zur Verfügung, so daß sich beim Schließen des Schalters 11 ein Stromfluß ergibt, der vom Rechenwerk 26 erkannt wird, so daß anschließend das Relais 22 den Stromkreis 10 wieder schließen kann.

Im dargestellten Ausführungsbeispiel liegt bei ausgeschaltetem Verbraucher 12 keinerlei Stromfluß im Stromkreis 10 vor. Es sind allerdings Fälle denkbar, bei denen trotz ausgeschaltetem Verbraucher 12 ein Strom im Stromkreis 10 fließt, der sich beispielsweise aufgrund eines Stand-by-Betriebs des Verbrauchers 12 einstellt. In einem solchen Falle wird der bei ausgeschaltetem Verbraucher 12 sich einstellende Strommeßwert mit einem im Speicher 37 abgespeicherten Referenzwert verglichen, und so lange der tatsächliche Strommeßwert kleiner ist als der abgespeicherte Referenzwert, bleibt der Stromkreis 10 durch entsprechende Ansteuerung des Relais 22 unterbrochen.

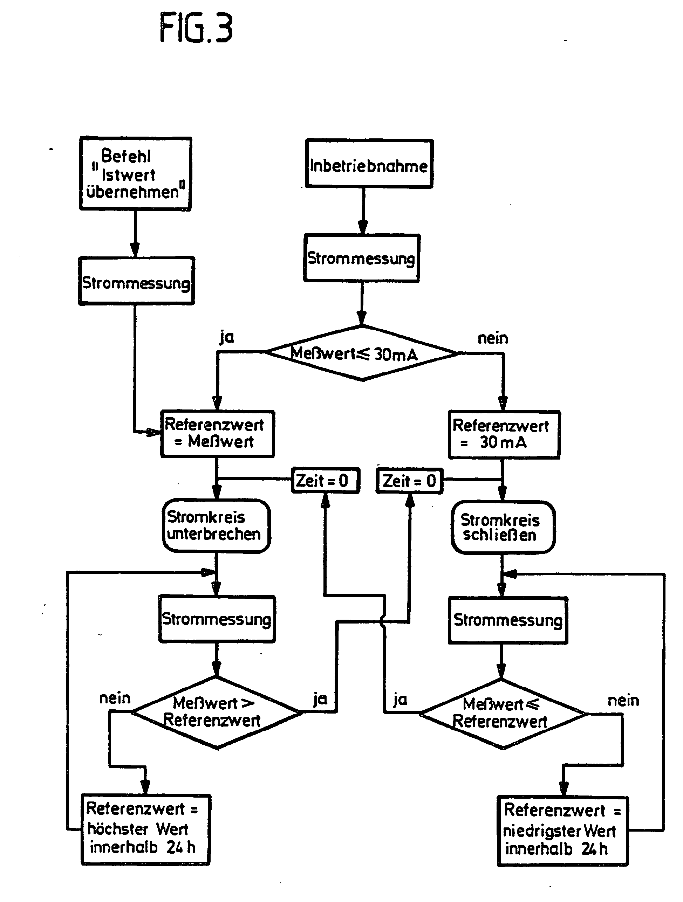

Zur Erläuterung der Bestimmung des Referenzwerts wird in Figur 3 ein Flußdiagramm dargestellt. Wie daraus deutlich wird, erfolgt bei der Inbetriebnahme des Schaltgeräts 20 zunächst eine Strommessung mittels des Stromwandlers 32 und des Rechenwerks 26. In der Funktion einer Vergleichseinheit wird anschließend vom Rechenwerk 26 der so ermittelte Strommeßwert mit einem herstellerseitig vorgegebenen und im nicht-flüchtigen Speicher 37 abgespeicherten Festwert verglichen, der im dargestellten Ausführungsbeispiel 30 mA beträgt. Ist der tatsächlich vorherrschende Strommeßwert größer als der vorgegebene Festwert, so wird als Referenzwert der Festwert von 30 mA beibehalten und der Stromkreis 10 bleibt geschlossen. Anschließend wird in einem weiteren Meßzyklus eine erneute Strommessung durchgeführt und der so gewonnene Strommeßwert mit dem gespeicherten Referenzwert verglichen. Liegt der aktuelle Strommeßwert wiederum über dem Referenzwert, so wird der Meßzyklus erneut wiederholt. Gleichzeitig erfolgt im Rechenwerk 26 eine Bestimmung des niedrigsten Strommeßwerts, der innerhalb von 24 Stunden während der aufeinanderfolgenden Meßzyklen ermittelt wurde. Dieser Referenzwert wird dann den weiteren Meßzyklen zugrundegelegt.

Wird beim Vergleich des aktuellen Strommeßwerts festgestellt, daß dieser kleiner ist als der im Speicher 37 abgespeicherte Referenzwert - hierbei kann es sich während des ersten 24-Stundenbetriebs um den herstellerseitig vorgegebenen Festwert handeln und später um den in einer 24-stündigen Lernphase ermittelten niedrigsten Strommeßwert - so erfolgt über das Relais 22 eine Unterbrechung des Stromkreises 10. Gleichzeitig wird das mit dem Rechenwerk 26 in Verbindung stehende Zeitglied 38 auf Null zurückgesetzt, so daß eine neue 24-stündige Lernphase in Gang gesetzt wird. Nach der Unterbrechung des Stromkreises erfolgt eine neue Strommessung, und der hierbei gewonnene Strommeßwert wird wiederum mit dem maßgeblichen Referenzwert verglichen, der im Speicher 37 abgespeichert ist. Wiederum erfolgen dann aufeinanderfolgend weitere Meßzyklen. In dieser Phase mit unterbrochenem Stromkreis ist es nicht unbedingt erforderlich, daß der Referenzwert erneut ermittelt und aktualisiert, d.h. im Speicher 37 abgespeichert wird. Für die fortlaufenden Meßzyklen kann vielmehr der bei geschlossenem Stromkreis zuletzt ermittelte Referenzwert beibehalten werden.

Es ist jedoch möglich, daß sich - beispielsweise durch Verwendung unterschiedlicher Verbraucher - auch bei unterbrochem Stromkreis der Strommeßwert ändert. In einem solchen Fall wird als neuer Referenzwert der bei unterbrochenem Stromkreis aufgrund der vom Rechenwerk 26 bereitgestellten Meßspannung sich einstellende höchste Strommeßwert innerhalb von 24 Stunden herangezogen. Liegt beispielsweise zunächst ein Referenzwert von 30 mA vor und werden dann nacheinander die Netzstecker verschiedener Verbraucher gezogen, so daß der Strom von 30 mA über zunächst 20 mA auf letztlich 10 mA absinkt, so wird als Referenzwert bei nach wie vor unterbrochenem Stromkreis zuerst ein Wert von 20 mA und erst nach Ablauf von weiteren 24 Stunden ein Wert von 10 mA herangezogen.

Wird der Verbraucher 12 bei unterbrochenem Stromkreis 10 eingeschaltet, so hat das aufgrund der Beaufschlagung des Stromkreises 10 mit einer Meßspannung über die Ausgangsleitung 30 einen erhöhten Stromfluß zur Folge. Dies wird vom Rechenwerk 26 bei seinem Vergleich des aktuellen Strommeßwerts mit dem aktuellen Referenzwert erkannt, da nunmehr der aktuelle Strommeßwert über dem maßgeblichen Referenzwert liegt. Daraufhin wird der Stromkreis 10 vom Rechenwerk 26 über das Relais 22 geschlossen, und gleichzeitig wird das Zeitglied 38 wieder auf Null zurückgesetzt, so daß bei geschlossenem Stromkreis eine neue 24-stündige Lernphase in Lauf gesetzt wird.

Durch fortlaufende Meßzyklen wird festgestellt, wenn der Verbraucher 12 wieder ausgeschaltet wird. Die damit verbundene Verringerung des Strommeßwerts hat dann ein erneutes Unterbrechen des Stromkreises 10 zur Folge. Der jeweils maßgebliche Referenzwert, der im Speicher 37 abgespeichert ist, wird gleichzeitig vom Anzeigeelement 40 angezeigt.

Anstatt bei der Inbetriebnahme des Schaltgeräts 20 zunächst den herstellerseitig vorgegebenen Festwert von im Ausführungsbeispiel 30 mA heranzuziehen, kann alternativ auch der bei der Inbetriebnahme des Schaltgeräts 20 ermittelte erste Strommeßwert als Referenzwert im Speicher 37 abgespeichert werden, der dann während der ersten 24-stündigen Lernphase als Referenzwert für den Vergleich mit den jeweils aktuellen Strommeßwerten herangezogen wird. Um den bei der ersten Strommessung ermittelten Strommeßwert als Referenzwert zu verwenden, kann über die Bedienelemente 39 ein entsprechender Befehl "Ist-Wert übernehmen" eingegeben werden. Hierzu kann beispielsweise eine Taste vorgesehen sein, über die dem Rechenwerk 26 der entsprechende Befehl übermittelt wird. Die Bedienelemente 39 können zusätzlich einen Hauptschalter zum Einschalten des Schaltgeräts 20 umfassen. Alternativ können Anwesenheitssensoren 45 vorgesehen sein, die sich über die Signalleitung 44 an das Rechenwerk 26 anschließen lassen. Die Anwesenheitssensoren können in dem Raum, beispielsweise im Schlafzimmer, installiert werden, der mittels des Schaltgeräts 20 von elektromagnetischen Feldern freigeschaltet werden soll. Das Schaltgerät 20 wird dann selbsttätig bei Eintritt eines Benutzers in den freizuschaltenden Raum aktiviert.

An das Rechenwerk 26 kann über die Ausgabeleitung 47 eine Zentraleinheit eines Prüfgeräts angeschlossen werden. Über die Ausgabeleitung 47 kann dann von der angeschlossenen Zentraleinheit das Schaltverhalten des Schaltgeräts 20 aufgezeichnet werden. Alternativ kann vorgesehen sein, daß die vom Rechenwerk 26 über die Steuerleitungen 23 und 24 an das Relais 22 ausgegebenen Steuersignale im Speicher 37 abgespeichert werden, so daß sie bei Anschluß der Zentraleinheit 48 an diese ausgegeben werden können.

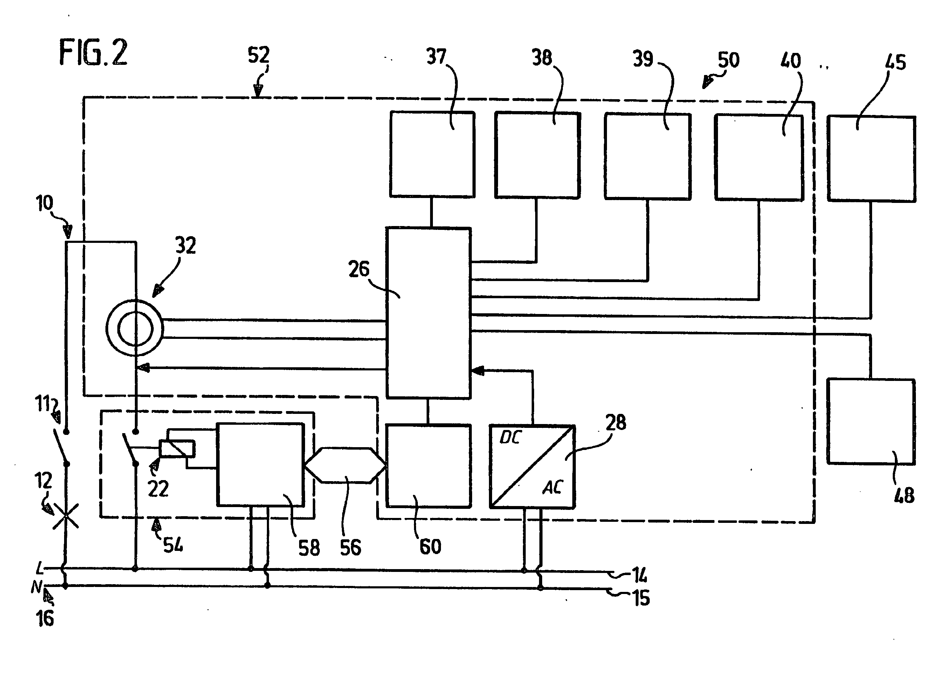

In Figur 2 ist ein Schaltrelais 50 dargestellt, das im wesentlichen dem Schaltrelais 20 entspricht, es wurden deshalb für identische Bauteile dieselben Bezugszeichen verwendet wie in Figur 1. Im Gegensatz zum Schaltgerät 20 ist das Schaltgerät 50 zweiteilig ausgestaltet und umfaßt ein Steuerteil 52 und ein Lastteil 54. Das Lastteil 54 ist über eine BUS-Verbindung 56 mit dem Steuerteil 52 verbunden. Alternativ kann zur BUS-Verbindung 56 auch eine Funkverbindung oder ein power net zum Einsatz kommen. Das Lastteil 54 wird im wesentlichen vom Relais 22 gebildet, zusätzlich ist ein Datenempfänger und Schaltaktor 58 vorgesehen, der über die BUS-Verbindung 56 mit einem mit dem Rechenwerk 26 in elektrischer Verbindung stehenden Datensender 60 gekoppelt ist.

Das Steuerteil wird vom Stromwandler 32 und dem Rechenwerk 26, dem Gleichrichter und Spannungswandler 28 sowie dem Speicher 37, dem Zeitglied 38 und dem Bedien- und Anzeigeelement 39, 40 gebildet.

Wie bereits bei dem in Figur 1 dargestellten Schaltgerät 20 können auch beim Schaltgerät 50 zusätzlich ein Anwesenheitssensor 45 sowie eine Zentraleinheit 48 angeschlossen werden.

Bei beiden Ausführungsformen kann alternativ zum Anwesenheitssensor 45 auch ein Lichtsensor vorgesehen sein, der in dem vom elektromagnetischen Feld freizuschaltenden Raum installiert wird. Solange kein Licht eingeschaltet wird, wird das Schaltgerät 20 bzw. 50 ausgeschaltet und damit der Stromkreis 10 unterbrochen.

Die Betriebsweise des Schaltgeräts 50 ist mit der unter Bezugnahme aus Figur 3 dargestellten Betriebsweise des Schaltgeräts 20 identisch. Beide Schaltgeräte zeichnen sich insbesondere durch ein "Selbstlernverhalten" aus, indem sie selbsttätig für den jeweils maßgeblichen Referenzwert den innerhalb einer 24-stündigen Lernphase auftretenden geringsten Strommeßwert ermitteln. Die Schaltgeräte 20, 50 zeichnen sich somit durch eine besonders einfache Handhabung aus.

## Patentansprüche

1. Schaltgerät zur Unterbrechung der Stromversorgung von in einen Stromkreis geschalteten Verbrauchern, insbesondere in Schlafräumen, mit einer Meßeinheit zum Messen des im Stromkreis fließenden Stroms, einer Vergleichseinheit zum Vergleichen des Strommeßwerts mit einem Referenzwert, einer Schalteinheit zum Unterbrechen und Schließen des Stromkreises und mit einer Spannungsversorgungseinheit zum Bereitstellen einer Meßspannung bei unterbrochenem Stromkreis, wobei die Schalteinheit den Stromkreis unterbricht, wenn der Strommeßwert einen Referenzwert unterschreitet, **dadurch gekennzeichnet, daß** der bei geschlossenem Stromkreis (10) auftretende niedrigste Strommeßwert selbsttätig bestimmbar und ein diesem entsprechender Wert als Referenzwert für die Vergleichseinheit (26) speicherbar ist.

2. Schaltgerät nach Anspruch 1, **dadurch gekennzeichnet, daß** der innerhalb eines bestimmten Zeitintervalls auftretende niedrigste Strommeßwert als Referenzwert speicherbar ist.

3. Schaltgerät nach Anspruch 2, **dadurch gekennzeichnet, daß** die Länge des Zeitintervalls vorgebbar ist.

4. Schaltgerät nach einem der voranstehenden Ansprüche, **dadurch gekennzeichnet, daß** der Referenzwert in bestimmten Zeitabständen aktualisierbar ist.

5. Schaltgerät nach Anspruch 4, **dadurch gekennzeichnet, daß** die Zeitabstände vorgebbar sind.

6. Schaltgerät nach einem der voranstehenden Ansprüche, **dadurch gekennzeichnet, daß** für den Referenzwert ein Minimal- und/oder ein Maximalwert vorgebbar ist.

7. Schaltgerät nach einem der voranstehenden Ansprüche, **dadurch gekennzeichnet, daß** bei Inbetriebnahme des Schaltgeräts (20; 50) ein Festwert als Referenzwert für die Vergleichseinheit (26) heranziehbar ist.

8. Schaltgerät nach Anspruch 7, **dadurch gekennzeichnet, daß** der Festwert vorgebbar ist.

9. Schaltgerät nach Anspruch 7 oder 8, **dadurch gekennzeichnet, daß** der Festwert durch Messung des bei Inbetriebnahme des Schaltgeräts (20; 50) im Stromkreis (10) fließenden Stroms bestimmbar ist.

10. Schaltgerät nach einem der voranstehenden Ansprüche, **dadurch gekennzeichnet, daß** ein Referenzwert mittels Bedienelemente (39) eingebbar ist.

11. Schaltgerät nach einem der voranstehenden Ansprüche, **dadurch gekennzeichnet, daß** mittels eines Bedienelementes (39) ein aktueller Strommeßwert als Referenzwert abspeicherbar ist.

12. Schaltgerät nach Anspruch 10 oder 11, **dadurch gekennzeichnet, daß** ein weiterer Referenzwert erst nach einem nachfolgenden Eingabebefehl abspeicherbar ist.

13. Schaltgerät nach einem der voranstehenden Ansprüche, **dadurch gekennzeichnet, daß** zwischen dem Unterbrechen und dem Schließen des Stromkreises (10) eine Hysterese vorliegt.

14. Schaltgerät nach Anspruch 13, **dadurch gekennzeichnet, daß** die Hysterese einstellbar ist.

15. Schaltgerät nach Anspruch 14, **dadurch gekennzeichnet, daß** die Einstellung der Hysterese selbsttätig erfolgt.

16. Schaltgerät nach einem der voranstehenden Ansprüche, **dadurch gekennzeichnet, daß** das Schaltgerät (20; 50) einen elektronische Speicher (37) aufweist.

17. Schaltgerät nach einem der voranstehenden Ansprüche, **dadurch gekennzeichnet, daß** das Schaltgerät (20; 50) ein Anzeigeelement (40) zum Anzeigen abgespeicherter Werte umfaßt.

18. Schaltgerät nach einem der voranstehenden Ansprüche, **dadurch gekennzeichnet, daß** das Schaltgerät (20; 50) eine Umschalteinheit umfaßt zum Umschalten zwischen manuell eingegebenen und selbsttätig abgespeicherten Werten.

19. Schaltgerät nach Anspruch 18, **dadurch gekennzeichnet, daß** die Umschaltung in Abhängigkeit eingebbarer Parameter, insbesondere in Abhängigkeit von der Uhrzeit, der Helligkeit und/oder der Temperatur selbsttätig erfolgt.

20. Schaltgerät nach einem der voranstehenden Ansprüche, **dadurch gekennzeichnet, daß** der Referenzwert mit Korrekturfaktoren verknüpfbar ist.

21. Schaltgerät nach einem der voranstehenden Ansprüche, **dadurch gekennzeichnet, daß** die Meßspannung einstellbar ist.

22. Schaltgerät nach einem der voranstehenden Ansprüche, **dadurch gekennzeichnet, daß** das Schaltgerät (20; 50) eine Dimmer-Erkennungsschaltung aufweist zum selbsttätigen Erkennen eines Dimmers im Stromkreis (10) und daß die Meßspannung selbsttätig einstellbar ist in Abhängigkeit vom Vorliegen eines Dimmers.

23. Schaltgerät nach einem der voranstehenden Ansprüche, **dadurch gekennzeichnet, daß** das Schaltgerät Schaltglieder zum manuellen Auslösen der vom Schaltgerät hervorgerufenen Schaltvorgänge umfaßt.

24. Schaltgerät nach einem der voranstehenden Ansprüche, **dadurch gekennzeichnet, daß** das Schaltgerät (50) ein Lastteil (54) zum Unterbrechen und Schließen des Stromkreises (10) umfaßt sowie ein Steuerteil (52) zur Ansteuerung des Lastteils (54).

25. Schaltgerät nach Anspruch 24, **dadurch gekennzeichnet, daß** das Lastteil (54) über ein Fernübertragungsmedium (56) mit dem Steuerteil (52) in elektrischer Verbindung steht.

26. Schaltgerät nach Anspruch 24 oder 25, **dadurch gekennzeichnet, daß** das Schaltgerät mehrere Steuerteile umfaßt, die mit dem Lastteil in Verbindung stehen.

27. Schaltgerät nach einem der voranstehenden Ansprüche, **dadurch gekennzeichnet, daß** das Schaltgerät (20; 50) mittels Anwesenheitssensoren (45) aktivierbar ist.

28. Schaltgerät nach einem der voranstehenden Ansprüche, **dadurch gekennzeichnet, daß** an das Schaltgerät (20; 50) eine Aufzeichnungseinheit (48) anschließbar ist zum Aufzeichnen des Schaltverhaltens des Schaltgeräts (20; 50).

## Claims

1. A switching device for interrupting the current supply of consumer devices connected in a circuit, in particular in sleeping quarters, with a measuring unit for measuring the current flowing in the circuit, a comparator unit for comparing the measurement value of the current with a reference value, a switching unit for interrupting and closing the circuit and with a voltage supply unit for forming a measurement voltage with the circuit interrupted, wherein the switching unit interrupts the circuit when the measurement value of the current falls below a reference value, **characterized in that** the lowest measurement value of the current occurring when the circuit (10) is closed is capable of being determined automatically and a value corresponding to this is capable of being stored as a reference value for the comparator unit (26).

2. A switching device according to claim 1, **characterized in that** the lowest measurement value of the current occurring within a specified time interval is capable of being stored as a reference value.

3. A switching device according to claim 2, **characterized in that** the length of the time interval is capable of being pre-set.

4. A switching device according to any one of the preceding claims, **characterized in that** the reference value is capable of being updated at specified time intervals.

5. A switching device according to claim 4, **characterized in that** the time intervals are capable of being pre-set.

6. A switching device according to any one of the preceding claims, **characterized in that** a minimum and/or a maximum value is capable of being pre-set for the reference value.

7. A switching device according to any one of the preceding claims, **characterized in that** at the start of operation of the switching device (20; 50) a fixed value is capable of being used as a reference value for the comparator device (26).

8. A switching device according to claim 7, **characterized in that** the fixed value is capable of being pre-set.

9. A switching device according to claim 7 or 8, **characterized in that** the fixed value is capable of being determined by measurement of the current flowing in the circuit (10) at the start of operation of the switching device (20; 50).

10. A switching device according to any one of the preceding claims, **characterized in that** a reference value is capable of being entered by means of control elements (39).

11. A switching device according to any one of the preceding claims, **characterized in that** a prevailing measurement value of the current is capable of being stored as a reference value by means of a control element (39).

12. A switching device according to claim 10 or 11, **characterized in that** a further reference value is capable of being stored only after a following input command.

13. A switching device according to any one of the preceding claims, **characterized in that** hysteresis is present between the interrupting and the closing of the circuit (10).

14. A switching device according to claim 13, **characterized in that** the hysteresis is capable of being set.

15. A switching device according to claim 14, **characterized in that** the setting of the hysteresis is carried out automatically.

16. A switching device according to any one of the preceding claims, **characterized in that** the switching device (20; 50) has an electronic memory (37).

17. A switching device according to any one of the preceding claims, **characterized in that** the switching device (20; 50) comprises a display element (40) for displaying stored values.

18. A switching device according to any one of the preceding claims, **characterized in that** the switching device (20; 50) comprises a switch unit for switching between values entered manually and values stored automatically.

19. A switching device according to claim 18, **characterized in that** the switching takes place automatically in a manner dependent upon parameters capable of being entered, in particular in a manner dependent upon the time, the brightness and/or the temperature.

20. A switching device according to any one of the preceding claims, **characterized in that** the reference value is capable of being linked to correction factors.

21. A switching device according to any one of the preceding claims, **characterized in that** the measurement voltage is capable of being set.

22. A switching device according to any one of the preceding claims, **characterized in that** the switching device (20; 50) has a dimmer recognition circuit for automatically recognizing a dimmer in the circuit (10), and the measurement voltage is capable of being set automatically in a manner dependent upon the presence of a dimmer.

23. A switching device according to any one of the preceding claims, **characterized in that** the switching device comprises switching members for the manual initiation of the switching procedure effected by the switching device.

24. A switching device according to any one of the preceding claims, **characterized in that** the switching device (50) comprises a load part (54) for interrupting and closing the circuit (10) and a control part (52) for actuating the load part (54).

25. A switching device according to claim 24, **characterized in that** the load part (54) is electrically connected to the control part (52) by way of a remote-transmission medium (56).

26. A switching device according to claim 24 or 25, **characterized in that** the switching device comprises a plurality of control parts which are connected to the load part.

27. A switching device according to any one of the preceding claims, **characterized in that** the switching device (20; 50) is capable of being activated by means of presence sensors (45).

28. A switching device according to any one of the preceding claims, **characterized in that** a recording unit (48) is capable of being attached to the switching device (20; 50) for recording the switching behaviour of the switching device (20; 50).

## Revendications

1. Appareil de commutation permettant d'interrompre l'alimentation électrique de consommateurs montés dans un circuit, en particulier dans des chambres à coucher, avec une unité de mesure permettant de mesurer le courant circulant dans le circuit, une unité de comparaison permettant de comparer la valeur mesurée du courant avec une valeur de référence, une unité de commutation permettant d'interrompre et de fermer le circuit et avec une unité d'alimentation en tension servant à mettre à disposition une tension de mesure lorsque le circuit est interrompu, l'unité de commutation interrompant le circuit lorsque la valeur mesurée du courant devient inférieure à une valeur de référence, **caractérisé en ce que** la plus faible valeur mesurée du courant apparaissant lorsque le circuit (10) est fermé peut être déterminée de façon automatique et une valeur correspondant à celle-ci peut être enregistrée comme valeur de référence pour l'unité de comparaison (26).

2. Appareil de commutation selon la revendication 1, **caractérisé en ce que** la plus faible valeur mesurée du courant apparaissant dans une période donnée peut être enregistrée comme valeur de référence.

3. Appareil de commutation selon la revendication 2, **caractérisé en ce que** la longueur de la période peut être prédéfinie.

4. Appareil de commutation selon l'une quelconque des revendications précédentes, **caractérisé en ce que** la valeur de référence peut être actualisée à des intervalles de temps donnés.

5. Appareil de commutation selon la revendication 4, **caractérisé en ce que** les intervalles de temps peuvent être prédéfinis.

6. Appareil de commutation selon l'une quelconque des revendications précédentes, **caractérisé en ce qu'**une valeur minimum et / ou une valeur maximum peut être prédéfinie pour la valeur de référence.

7. Appareil de commutation selon l'une quelconque des revendications précédentes, **caractérisé en ce que** lors de la mise en service de l'appareil de commutation (20 ; 50), il est possible de recourir à une valeur fixe comme valeur de référence pour l'unité de comparaison (26).

8. Appareil de commutation selon la revendication 7, **caractérisé en ce que** la valeur fixe peut être prédéfinie.

9. Appareil de commutation selon la revendication 7 ou 8, **caractérisé en ce que** la valeur fixe peut être déterminée en mesurant le courant circulant dans le circuit (10) lors de la mise en service de l'appareil de commutation (20 ; 50).

10. Appareil de commutation selon l'une quelconque des revendications précédentes, **caractérisé en ce qu'**une valeur de référence peut être saisie au moyen d'éléments de manoeuvre (39).

11. Appareil de commutation selon l'une quelconque des revendications précédentes, **caractérisé en ce qu'**une valeur mesurée du courant actuelle peut être enregistrée comme valeur de référence au moyen d'un élément de manoeuvre (39).

12. Appareil de commutation selon la revendication 10 ou 11, **caractérisé en ce qu'**une autre valeur de référence ne peut être enregistrée qu'après un ordre de saisie subséquent.

13. Appareil de commutation selon l'une quelconque des revendications précédentes, **caractérisé en ce qu'**il y a une hystérésis entre l'interruption et la fermeture du circuit (10).

14. Appareil de commutation selon la revendication 13, **caractérisé en ce que** l'hystérésis peut être réglée.

15. Appareil de commutation selon la revendication 14, **caractérisé en ce que** le réglage de l'hystérésis se fait de façon automatique.

16. Appareil de commutation selon l'une quelconque des revendications précédentes, **caractérisé en ce que** l'appareil de commutation (20 ; 50) présente une mémoire électronique (37).

17. Appareil de commutation selon l'une quelconque des revendications précédentes, **caractérisé en ce que** l'appareil de commutation (20 ; 50) comporte un élément d'affichage (40) permettant d'afficher des valeurs mémorisées.

18. Appareil de commutation selon l'une quelconque des revendications précédentes, **caractérisé en ce que** l'appareil de commutation (20 ; 50) comporte une unité de sélection permettant de commuter entre les valeurs saisies manuellement et les valeurs enregistrées automatiquement.

19. Appareil de commutation selon la revendication 18, **caractérisé en ce que** la commutation se fait automatiquement en fonction de paramètres saisissables, en particulier en fonction de l'heure, de la luminosité et/ou de la température.

20. Appareil de commutation selon l'une quelconque des revendications précédentes, **caractérisé en ce que** la valeur de référence peut être associée à des facteurs de correction.

21. Appareil de commutation selon l'une quelconque des revendications précédentes, **caractérisé en ce que** la tension de mesure peut être réglée.

22. Appareil de commutation selon l'une quelconque des revendications précédentes, **caractérisé en ce que** l'appareil de commutation (20 ; 50) présente un circuit de détection de variateur permettant la détection automatique d'un variateur dans le circuit (10) et **en ce que** la tension de mesure peut être réglée automatiquement en fonction de la présence d'un variateur.

23. Appareil de commutation selon l'une quelconque des revendications précédentes, **caractérisé en ce que** l'appareil de commutation comporte des organes de commutation permettant le déclenchement manuel des commutations provoquées par l'appareil de commutation.

24. Appareil de commutation selon l'une quelconque des revendications précédentes, **caractérisé en ce que** l'appareil de commutation (50) comporte un élément de charge (54) permettant d'interrompre et de fermer le circuit (10) ainsi qu'un élément de commande (52) permettant de commander l'élément de charge (54).

25. Appareil de commutation selon la revendication 24, **caractérisé en ce que** l'élément de charge (54) est en relation électrique avec l'élément de commande (52) par le biais d'un moyen de télétransmission (56).

26. Appareil de commutation selon la revendication 24 ou 25, **caractérisé en ce que** l'appareil de commutation comporte plusieurs éléments de commande qui communiquent avec l'élément de charge.

27. Appareil de commutation selon l'une quelconque des revendications précédentes, **caractérisé en ce que** l'appareil de commutation (20 ; 50) peut être activé à l'aide de détecteurs de présence (45).

28. Appareil de commutation selon l'une quelconque des revendications précédentes, **caractérisé en ce qu'**une unité d'enregistrement (48) peut être raccordée à l'appareil de commutation (20 ; 50) pour enregistrer le comportement de commutation de l'appareil de commutation (20 ; 50).
